(19) Europäisches Patentamt / European Patent Office / Office européen des brevets

(11) **EP 2 146 104 A2**

(12) **EUROPÄISCHE PATENTANMELDUNG**

(43) Veröffentlichungstag:
   **20.01.2010   Patentblatt 2010/03**

(51) Int Cl.:
   **F16B 13/06** *(2006.01)*

(21) Anmeldenummer: **09007931.0**

(22) Anmeldetag: **17.06.2009**

(84) Benannte Vertragsstaaten:
   **AT BE BG CH CY CZ DE DK EE ES FI FR GB GR HR HU IE IS IT LI LT LU LV MC MK MT NL NO PL PT RO SE SI SK TR**
   Benannte Erstreckungsstaaten:
   **AL BA RS**

(30) Priorität: **16.07.2008   DE 102008033463**

(71) Anmelder: **fischerwerke GmbH & Co. KG**
   **72178 Waldachtal (DE)**

(72) Erfinder:
   • **Hengesbach, Wolfgang**
     **72280 Dornstetten (DE)**
   • **Suchy, Ulrich**
     **72250 Freudenstadt (DE)**

(54) **Spreizanker**

(57)   Die Erfindung betrifft einen Spreizanker (1) aus Metall mit einer Ankerstange (7), mit einem ein Spreizelement (8) aufweisenden Spreizbereich (12) und mit einem Lastangriffsbereich (16). Zur Verbesserung des Verhältnisses von Materialeinsatz zu Tragfähigkeit des Spreizankers (1) schlägt die Erfindung vor, das Widerstandsmoment gegen Biegung im Schaftbereich (17) zwischen Spreizbereich (12) und Lastangriffsbereich (16) zu mindern, da bekannte Spreizanker in diesem Bereich überdimensioniert sind. Dies soll durch Verringerung der Querschnittfläche A über eine Mindestlänge und/oder durch einen nicht-kreisförmigen Querschnitt erfolgen.

EP 2 146 104 A2

**Beschreibung**

Die Erfindung betrifft einen Spreizanker aus Metall mit den Merkmalen des Oberbegriffs des Anspruchs 1 oder des Anspruchs 9.

Spreizanker aus Metall zur Befestigung von Gegenständen an einem Untergrund, insbesondere einem Mauerwerk oder einem Betonkörper, sind allgemein bekannt. Ein typisches Beispiel zeigt die Druckschrift DE 4219984 A1. Der hier gezeigte Spreizanker weist eine Ankerstange aus Stahl oder dgl. und einen Spreizbereich am einbringseitigen vorderen Ende mit einer axial verschiebbaren Spreizhülse als Spreizelement auf. Zur Erzielung einer Spreizwirkung weist der Spreizbereich einen sich in Einbringrichtung erweiternden Querschnitt auf. Am gegenüberliegenden Ende weist die Ankerstange einen Lastangriffsbereich in Form eines Außengewindes auf. Zum Setzen des Spreizankers wird die Ankerstange mit dem Spreizbereich voraus in ein Bohrloch gesteckt, der zu befestigende Gegenstand über das Außengewinde geschoben und dann mit einer Mutter auf dem Außengewinde die Ankerstange angezogen, wobei sich die Mutter auf dem Gegenstand abstützt. Die Spreizhülse verkrallt sich dabei im Bohrloch und verschiebt sich somit relativ zur Ankerstange, wodurch es zu einer Verspreizung kommt.

Im Weiteren wird der das Spreizelement im unverspreizten Zustand führende Abschnitt als Halsbereich bezeichnet. Er grenzt an den Spreizbereich an. Der Bereich zwischen Halsbereich und Lastangriffsbereich wird als Übergangsbereich bezeichnet und Halsbereich und Übergangsbereich gemeinsam als Schaftbereich.

Der Erfindung liegt die Aufgabe zu Grunde, derartige Spreizanker zu schaffen, die bei mindestens gleicher Tragfähigkeit weniger Material benötigen.

Diese Aufgabe wird erfindungsgemäß durch die Merkmale des Anspruchs 1 und durch die Merkmale des Anspruchs 9 gelöst.

Im Rahmen der Erfindung wurde festgestellt, dass die Ankerstangen der bekannten Spreizanker ungünstig dimensioniert sind. Die auf die Ankerstange durch den befestigten Gegenstand wirkenden Kräfte können in axial wirkende Zugbeziehungsweise Druckkräfte und Querkräfte unterschieden werden, wobei häufig eine Kombination beider Belastungsarten auftritt. Für die axialen Kräfte ist in der Regel die kleinste Querschnittsfläche zwischen dem Spreizbereich und dem Lastangriffsbereich bestimmend. Meist liegt diese kleinste Querschnittfläche im Halsbereich. Die Querkräfte werden im Schaftbereich zwischen dem Lastangriffsbereich und dem Spreizbereich zur Bohrlochwand abgetragen. Dabei wird allgemein davon ausgegangen, dass die Querkräfte im Bereich des Bohrlochmundes und darüber hinaus über eine gewisse Länge entlang der Bohrlochwand übertragen werden. Dies hängt vor allem damit zusammen, dass weder die Ankerstange noch der Untergrund ideal steif sind, sondern sich zumindest geringförmig verformen. Entsprechend wirkt eine sich über die Länge der Ankerstange verändernde Biegebelastung. Bei allgemeinen bauaufsichtlichen Zulassungen des Deutschen Instituts für Bautechnik wird beispielsweise davon ausgegangen, dass das maximale Biegemoment in einer Bohrlochtiefe entsprechend dem Nenndurchmesser des Ankers wirkt und sich von dort aus in Richtung des Bohrlochgrundes über eine Länge entsprechend dem Vierfachen des Nenndurchmessers abbaut.

Nachteilig an den bekannten Ankern ist, dass diese zumeist einen über die Länge im Wesentlichen konstanten, kreisförmigen Durchmesser im Schaftbereich aufweisen, und damit in einem dem Spreizbereich nahen Bereich stabiler sind als eigentlich notwendig. Die Erfindung schlägt daher vor, den Querschnitt den kritischen Zugkräften und Biegemomenten anzupassen. Der Ort der maximalen Belastung aus Zugkräften und Biegemomenten nahe dem Bohrlochmund benötigt die maximale Querschnittsfläche, die zumeist durch den Bohrlochdurchmesser bestimmt ist. Üblicherweise wird diese Querschnittsfläche A1 im Wesentlichen der des Lastangriffsbereichs entsprechen. Ausgehend hiervon kann die Tragfähigkeit in Richtung des Spreizbereiches entsprechend der Abnahme der Biegemomente reduziert werden. Dabei kommt es auf das Widerstandsmoment gegen Biegung an. Da für die Zugkräfte die Größe der Querschnittfläche im Halsbereich bestimmend ist, stellt gleichzeitig diese Querschnittfläche A2 die minimale Querschnittsfläche im Schaftbereich dar. Der Querschnitt der Ankerstange kann also erfindungsgemäß unter Beachtung von Widerstandsmoment und Mindestquerschnittsfläche gezielt in einem Bereich zwischen Lastangriffsbereich und Spreizbereich geschwächt werden.

Zur Änderung des Widerstandsmoments kommen grundsätzlich zwei Faktoren in Frage, die miteinander kombinierbar sind: zum einen eine Änderung der Querschnittsfläche, zum anderen eine Änderung der Querschnittsform. Aus diesen zwei Grundansätzen resultieren die beiden unabhängigen Ansprüche 1 und 9.

Entsprechend Anspruch 1 weist daher die Ankerstange des erfindungsgemäßen Spreizankers einen Spreizbereich und einem Lastangriffsbereich auf, wobei der Lastangriffsbereich insbesondere als Außengewinde ausgebildet ist. Statt einem Außengewinde kann der Lastangriffsbereich beispielsweise auch einen Haken, einen tellerförmigen Kopf oder ein Innengewinde aufweisen. Die Ankerstange ist insbesondere einstückig, kann aber auch mehrteilig ausgeführt sein. Die Ankerstange weist im Bereich des Lastangriffsbereichs eine erste Querschnittsfläche A1 auf. Im Falle einer sich über die Länge des Lastangriffsbereichs verändernden Querschnittsfläche ist diejenige Querschnittsfläche als Querschnittsfläche A1 anzusehen, die dem Bohrlochnenndurchmesser für die Ankerstange am nächsten kommt. Die Ankerstange weist in einem an den Spreizbereich angrenzenden Halsbereich eine zweite Querschnittsfläche A2 auf, die kleiner als die erste Querschnittsfläche A1 ist. Um eine möglichst gute Tragfähigkeit bei möglichst guter Materialausnutzung zu erreichen, reduziert sich die Querschnittfläche A im Wesentlichen auf die Querschnittsfläche A2. "Im Wesentlichen" bedeutet, dass die Flächenreduktion mindestens zu 50 %, insbesondere zu 75 % erfolgt. Anders ausgedrückt:

$$A2 \leq A \leq A1 - 0{,}5*(A1{-}A2),$$

insbesondere

$$A2 \leq A \leq A1 - 0{,}75*(A1{-}A2)$$

Die Flächenreduktion erfolgt in einem Übergangsbereich über eine Länge, die mindestens dem 0,5-fachen, insbesondere dem 1,0-fachen, des Durchmessers im Bereich der ersten Querschnittsfläche A1 entspricht. Dabei ist mit dem Begriff "Durchmesser" im Folgenden stets der Durchmesser eines den Querschitt beziehungsweise die Querschnittsfläche umschreibenden Kreises gemeint. Eine weitere Verbesserung wird erzielt, wenn diese Länge dem 2-fachen, insbesondere dem 4-fachen, des Durchmessers im Bereich der ersten Querschnittsfläche A1 entspricht. Die Querschnittsflächenverringerung soll also nicht in einer einzigen Stufe erfolgen, sondern über eine gewisse Länge verteilt sein, wobei sie in mehreren kleineren Stufen erfolgen kann. In diesem Fall entspricht die Länge dem Abstand zwischen erster und letzter Stufe. Sie kann auch als Kombination von Stufen und stetiger Verringerung erfolgen. Vorzugsweise erfolgt die Reduzierung stetig, also beispielsweise linear oder - bevorzugt - zunächst stärker und dann weniger stark. Die Erfindung schließt nicht aus, dass es neben der Querschnittsflächenverrringerung von A1 auf A2 in diesem Bereich über eine gewisse Länge auch zu einer Vergrößerung der Querschnittsfläche kommen kann, z.B. zur Bildung einer Anschlagschulter für das Spreizelement.

Durch die Reduzierung der Querschnittsfläche ergibt sich eine Materialeinsparung gegenüber bekannten Spreizankern. Mit der Materialeinsparung geht eine Kosten- und Gewichtseinsparung einher. Gegenüber Spreizankern, deren Querschnittsfläche sich in einer einzigen Stufe auf die zweite Querschnittsfläche A2 reduziert, wie dies z.B. aus der Druckschrift DE 3108388 (Figur 2) zum Setzen in nicht-geraden Bohrlöchern bekannt ist, wird eine deutlich erhöhte Querkrafttragfähigkeit erreicht.

Bei dem Spreizanker aus Anspruch 1 wird insbesondere, jedoch nicht ausschließlich, von einem durchgehenden Kreisquerschnitt ausgegangen. Bei einem durchgehenden Kreisquerschnitt würde eine Querschnittflächenänderung in einer einzigen Stufe einen zu großen Verlust an Widerstandsmoment bewirken. Setzt man dagegen an der Querschnittsform an, so kommt es bei günstiger Wahl weniger auf die Größe der Querschnittsfläche an.

Ensprechend wird mit Anspruch 9 ein Spreizanker mit einem ein Spreizelement aufweisenden Spreizbereich und mit einem Lastangriffsbereich beansprucht, wobei die Ankerstange einen Schaftbereich zwischen Spreizbereich und Lastangriffsbereich mit einem zumindest abschnittweise nicht-kreisförmigen Querschnitt aufweist. Nicht-kreisförmige Querschnitte in diesem Bereich sind beispielsweise aus der Druckschrift DE 2164666 bekannt. Allerdings handelt es sich hierbei lediglich um eine Einrichtung, die ein Mitdrehen des Ankers im Bohrloch verhindern soll. Überstehende Kanten sollen sich dazu in die Bohrlochwand eingraben. Aufgrund der kurzen Länge können diese Einrichtungen jedoch keinen signifikanten Beitrag zur Stabilität der Ankerstange leisten. Die Erfindung schlägt daher vor, dass der nicht-kreisförmige Querschnitt sich insgesamt über eine Länge erstreckt, die mindestens dem 1,0-fachen, insbesondere dem 2-fachen, des minimalen Durchmessers im Bereich des nicht-kreisförmigen Querschnitts entspricht.

Die Merkmale des Anspruchs 9 können mit den Merkmalen des Anspruchs 1 kombiniert werden, wobei es genügt, wenn jeweils nur eine der Längenbedingungen erfüllt ist. Vorzugsweise sind beide Längenbedingungen erfüllt, so dass die Ankerstange eine Querschnittfläche A aufweist, die sich im Übergangsbereich über eine Länge reduziert, die mindestens dem 0,5-fachen des Durchmessers im Bereich der ersten Querschnittsfläche A1 entspricht, und die Ankerstange einen nicht-kreisförmige Querschnitt aufweist, der sich insgesamt über eine Länge erstreckt, die mindestens dem 1,0-fachen des minimalen Durchmessers im Bereich des nicht-kreisförmigen Querschnitts entspricht.

Zur Gestaltung des nicht-kreisförmigen Querschnitts weist die Ankerstange des Spreizankers vorzugsweise Ausnehmungen auf. Damit ist eine konkave Form gemeint, beispielsweise im Gegensatz zu einem Mehrkantprofil. Die Ausnehmungen können beispielsweise nutartig sein, aber auch bohrungsartig. Derartige Geometrien haben den Vorteil, dass sie sowohl spanend als auch umformtechnisch einfach herzustellen sind. Außerdem ergibt sich ein besseres Verhältnis von Widerstandsmoment zu Materialeinsatz als beispielsweise bei einem Mehrkantprofil. Im einfachsten Fall weist die Ankerstange mindestens zwei, insbesondere drei oder vier Ausnehmungen auf.

Grundsätzlich gilt, dass das Verhältnis von Materialeinsatz zu Widerstandsmoment besser wird, je tiefer und schmaler die Ausnehmungen sind. Dieses Verhältnis wird außerdem vorzugsweise dadurch optimiert, dass die Ausnehmungen im Wesentlichen in Längsrichtung der Ankerstange verlaufen. Sie können aber auch beispielsweise wendelförmig, insbesondere mit sehr großer Steigung, verlaufen, um die Ankerstange beispielsweise in Bezug auf auftretende Torsionsmomente, also Momente um die Längsachse, zu verbessern.

In einer bevorzugten Ausführungsform nimmt die Querschnittsfläche der Ausnehmungen in Einbringrichtung der Ankerstange zu. Damit verringert sich gleichzeitig auf einfache Weise die Querschnittsfläche der Ankerstange in diesem Bereich.

Alternativ oder in Kombination mit Ausnehmungen weist die Ankerstange vorzugsweise Rippen auf, die insbesondere im Wesentlichen in Längsrichtung verlaufen. Die Rippen können abgerundet oder mit einer oder mehreren Kanten versehen werden. Sie können in Längsrichtung in mehrere Rippensegmente aufgeteilt sein und sie können, entsprechend den Ausführungen zu Ausnehmungen, auch wendelförmig angeordnet sein.

Um die Biegebelastung der Ankerstange möglichst niedrig zu halten, ist es günstig, wenn die Ankerstange im Übergangs- beziehungsweise Schaftbereich an der Bohrlochwand anliegt und zwar nicht nur unmittelbar am Bohrlochmund, sondern entsprechend der obigen Ausführungen über eine Länge etwa entsprechend dem Fünffachen des Nenndurchmessers der Bohrung. Vorzugsweise weist die Ankerstange daher im Bereich des nicht-kreisförmigen Querschnitts einen Durchmesser auf, der im Wesentlichen gleich groß wie der Durchmesser der Querschnittsfläche im Lastbereich ist, wobei diese wiederum im Wesentlichen dem Bohrlochnenndurchmesser für den Spreizanker entsprechen sollte. Die Gleichheit der Durchmesser muss nicht über die gesamte Länge des Übergangs- beziehungsweise Schaftbereichs gegeben sein, sondern es genügt, wenn sich die Ankerstange über Teilbereiche abstützen kann.

Die Erfindung wird nachfolgend anhand eines Ausführungsbeispiels erläutert.

Es zeigen:

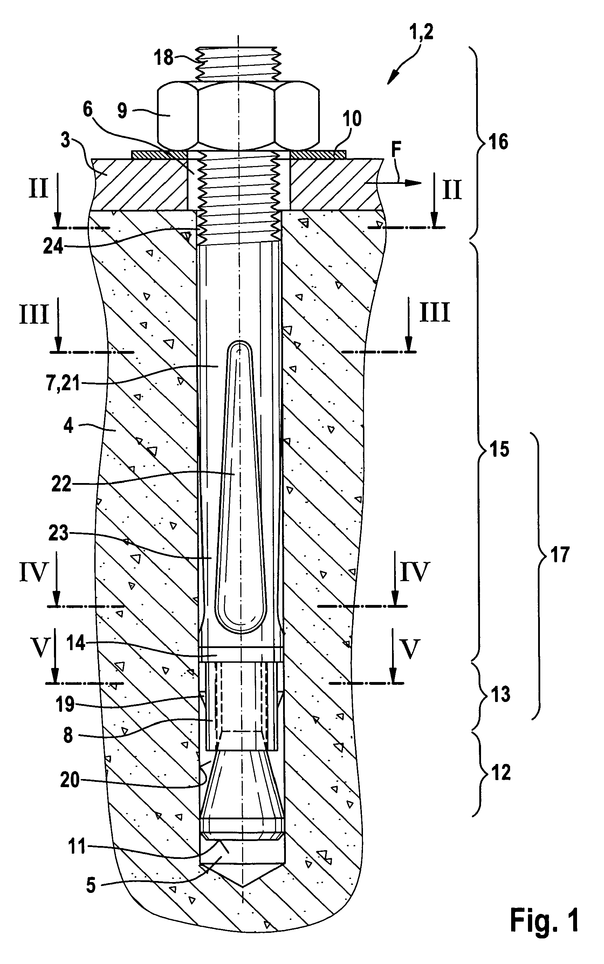

Figur 1        den erfindungsgemäßen Spreizanker als Teil einer Befestigungsanordnung in einer Schnittdarstellung; und

Figur 2 bis 5        Querschnitte entsprechend der Pfeile II bis V in Figur 1.

Der in den Figuren gezeigte Spreizanker 1 aus Stahl ist Teil einer Befestigungsanordnung 2 zur Befestigung eines plattenförmigen Gegenstandes 3 an einem Untergrund 4 aus Beton. Der Spreizanker 1 ist in noch unverspreiztem Zustand dargestellt. In den Untergrund 4 ist ein Bohrloch 5 mit einem Bohrlochnenndurchmesser entsprechend den Verwendungsvorgaben für den Spreizanker 1 eingebracht. Der Gegenstand 3 weist eine Durchgangsbohrung 6 auf, die im Wesentlichen mit dem Bohrloch 5 fluchtet. Der Spreizanker 1, der durch die Durchgangsbohrung 6 hindurch in das Bohrloch 5 ragt, besteht aus einer langgestreckten, kaltmassiv umgeformten Ankerstange 7, einem Spreizelement 8 in Form einer geschlitzten Spreizhülse, einer Mutter 9 und einer Unterlegscheibe 10.

Die Ankerstange 7 weist ein einbringseitiges Ende 11 auf, an das sich ein kegelförmiger Spreizbereich 12 anschließt. Die Querschnittsfläche der Ankerstange erweitert sich im Spreizbereich 12 in Richtung des einbringseitigen Endes 11. An den Spreizbereich 12 schließt sich ein zylindrischer Halsbereich 13 mit einer relativ kleinen Querschnittsfläche A2 an. Der Halsbereich 13 wird umfasst vom Spreizelement 8 und dient zu dessen Längsführung auf der Ankerstange 7. Damit das Spreizelement 8 beim Einführen des Spreizankers 1 in das Bohrloch 5 nicht verschoben wird, sondern nahe dem Spreizbereich 12 gehalten wird, schließt sich an den Halsbereich 13 eine bundartige Schulter 14 an. Sie ist bereits Teil eines Übergangsbereichs 15, der sich vom Spreizbereich 13 bis zu einem Lastangriffsbereich 16 erstreckt. Auf den Übergangsbereich 15 wird im Weiteren noch näher eingegangen. Er bildet gemeinsam mit dem Halsbereich 13 einen Schaftbereich 17 der Ankerstange 7. Der Lastangriffsbereich 16 entspricht wie die Schulter 14 in seiner Querschnittsfläche A1 im Wesentlichen dem Bohrlochnenndurchmesser, d.h. er füllt das Bohrloch 5 im Wesentlichen aus. Der Lastangriffsbereich 16 ragt aus dem Bohrloch 5 heraus durch die Durchgangsbohrung 6 des Gegenstands 3 hindurch und weist ein Außengewinde 18 auf, auf das die Mutter 9 geschraubt ist. Über die Unterlegscheibe 10 stützt sich die Mutter 9 in axialer Richtung auf dem Gegenstand 3 ab.

Zum Verankern des Spreizankers 1 wird nach dem Einschieben der Ankerstange 7 in das Bohrloch 5 die Mutter 9 angezogen. Das Speizelement 8 krallt sich dabei mit Hilfe von radial vorstehenden Ausprägungen 19 an der Bohrlochwand 20 fest, so dass es zu einer axialen Relativverschiebung des Spreizelements 8 gegenüber der Ankerstange 7 in Richtung des Spreizbereichs 12 kommt. Durch dessen konische Form wird das Spreizelement 8 radial verspreizt bis die Ankerstange 7 bei einem vorgegebenen Anziehdrehmoment einen festen Halt im Untergrund 4 gefunden hat.

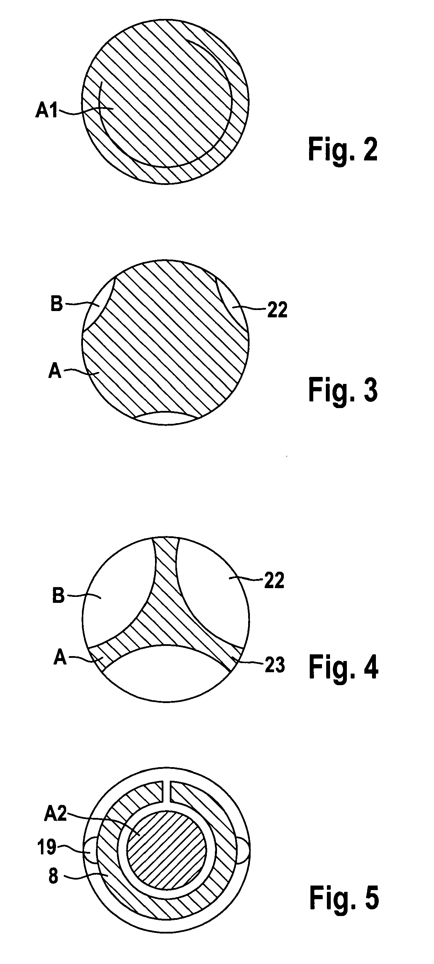

Der Übergangsbereich 15 weist einen zylindrischen Grundkörper 21 auf mit einem Durchmesser, der im Wesentlichen dem Durchmesser im Lastangriffsbereich 16 entspricht. Die Querschnittsfläche A im Übergangsbereich 15 ist durch drei über den Umfang verteilte, axial verlaufende Ausnehmungen 22 gemindert, so dass insofern der Grundkörper 21 von der Zylinderform abweicht. Wie aus den Figuren 3 und 4 deutlich wird, haben die Ausnehmungen 22 selbst einen Querschnitt in Form von Kreissegmenten, die mit ihrem Umfang radial zur Mittelachse der Ankerstange 7 weisen. Die Querschnittsfläche B der Ausnehmungen 22 nimmt in Richtung des einbringseitigen Endes zu, bis sie sich kurz vor der Schulter 14 auf Null reduziert. Entsprechend verringert sich die verbleibende Querschnittfläche A der Ankerstange 7 in diesem Bereich, bis sie sich wieder erweitert. Die in Figur 4 gezeigte Querschnittsfläche A im Bereich der größten Tiefe der Ausnehmungen 22 entspricht im Wesentlichen der in Figur 5 gezeigten Querschnittsfläche A2 der Ankerstange 7 im Halsbereich 13. Ausgehend von der Querschnittfläche A1 im Lastangriffsbereich 16 reduziert sich also die Querschnittfläche A im Wesentlichen auf die zweite Querschnittsfläche A2. Die Reduktion erfolgt über eine Länge, die etwa dem 3,2-fachen des Durchmessers im Bereich der Querschnittfläche A1 entspricht. Zwischen den Ausnehmungen 22 hat der Grundkörper 21 die Form von Rippen 23, wobei sich die Breite der Rippen über die Länge verändert.

Bei einer Querbelastung des Spreizankers 1 durch eine quer zur Längsachse der Ankerstange 7 am Gegenstand 3 angreifende Kraft F, wird die Ankerstange 7 auf Biegung und zusätzlich, allein schon aufgrund der Vorspannung durch das Anziehdrehmoment, auf Zug beansprucht. Durch Anlage der Ankerstange 7 an der Bohrlochwand 20 wird das Biegemoment durch Druckkräfte in den Untergrund 4 übertragen. Das maximale Biegemoment liegt dabei etwas unterhalb des Bohrlochmundes 24 an und baut sich von da an ab. Da das Widerstandsmoment der Ankerstange 7 etwa im gleichen Maße abnimmt, ist die maximale Spannung im jeweiligen Querschnitt etwa konstant. Damit wird das Material der Ankerstange 7 deutlich besser ausgenutzt als bei bekannten Ankerstangen, beziehungsweise eine Materialeinsparung erzielt. Gleichzeitig ergibt sich eine Kosten- und Gewichtseinsparung.

Bezugszeichenliste

**Spreizanker**

| 1 | Spreizanker |
|---|---|
| 2 | Befestigungsanordnung |
| 3 | Gegenstand |
| 4 | Untergrund |
| 5 | Bohrloch |
| 6 | Durchgangsbohrung |
| 7 | Ankerstange |
| 8 | Spreizelement |
| 9 | Mutter |
| 10 | Unterlegscheibe |
| 11 | einbringseitiges Ende |
| 12 | Spreizbereich |
| 13 | Halsbereich |
| 14 | Schulter |
| 15 | Übergangsbereich |
| 16 | Lastangriffsbereich |
| 17 | Schaftbereich |
| 18 | Außengewinde |
| 19 | Ausprägung |
| 20 | Bohrlochwand |
| 21 | Grundkörper |
| 22 | Ausnehmung |
| 23 | Rippe |
| 24 | Bohrlochmund |
| A/A1/A2 | Querschnittsfläche |
| B | Querschnittsfläche |
| F | Kraft |

**Patentansprüche**

1. Spreizanker (1) aus Metall mit einer Ankerstange (7), mit einem ein Spreizelement (8) aufweisenden Spreizbereich (12) und mit einem Lastangriffsbereich (16), insbesondere in Form eines Außengewindes, wobei die Ankerstange (7) im Bereich des Lastangriffsbereichs (16) eine erste Querschnittsfläche A1 aufweist, und wobei die Ankerstange (7) in einem an den Spreizbereich (12) angrenzenden Halsbereich (13) eine zweite Querschnittsfläche A2 aufweist, die kleiner als die erste Querschnittsfläche A1 ist, und wobei sich die Querschnittfläche A der Ankerstange (7) innerhalb eines Übergangsbereichs (15) zwischen Lastangriffsbereich (16) und Halsbereich (13) ausgehend von der ersten Querschnittsfläche A1 in Richtung des Spreizbereichs (12) im Wesentlichen auf die Größe der zweiten Querschnittsfläche A2 reduziert, **dadurch gekennzeichnet, dass** sich die Querschnittfläche A im Übergangsbereich (15) über eine Länge reduziert, die mindestens dem 0,5-fachen, insbesondere mindestens dem 1,0-fachen, des Durchmessers im Bereich der ersten Querschnittsfläche A1 entspricht.

2. Spreizanker nach Anspruch 1, **dadurch gekennzeichnet, dass** sich die Querschnittfläche A im Übergangsbereich (15) über eine Länge reduziert, die mindestens dem 2-fachen, insbesondere mindestens dem 4-fachen, des Durchmessers im Bereich der ersten Querschnittsfläche A1 entspricht.

3. Spreizanker nach Anspruch 1 oder 2, **dadurch gekennzeichnet, dass** der Übergangsbereich (15) einen zumindest abschnittsweise nicht-kreisförmigen Querschnitt aufweist.

4. Spreizanker nach Anspruch 3, **dadurch gekennzeichnet, dass** der Übergangsbereich (15) Ausnehmungen (22) aufweist, die insbesondere im Wesentlichen in Längsrichtung der Ankerstange (7) verlaufen.

5. Spreizanker nach Anspruch 4, **dadurch gekennzeichnet, dass** die Querschnittsfläche B der Ausnehmungen (22) in Einbringrichtung der Ankerstange (7) zunimmt.

6. Spreizanker nach Anspruch 3, **dadurch gekennzeichnet, dass** der Übergangsbereich (15) Rippen (23) aufweist, die insbesondere im Wesentlichen in Längsrichtung der Ankerstange (7) verlaufen.

7. Spreizanker nach Anspruch 3, **dadurch gekennzeichnet, dass** der Durchmesser des Querschnitts A im Bereich des nicht-kreisförmigen Querschnitts im Wesentlichen gleich groß wie der Durchmesser der Querschnittsfläche A1 ist.

8.  Spreizanker nach Anspruch 7, **dadurch gekennzeichnet, dass** der Durchmesser des Querschnitts A im Wesentlichen dem Bohrlochnenndurchmesser der Ankerstange entspricht.

9.  Spreizanker aus Metall mit einem ein Spreizelement aufweisenden Spreizbereich und mit einem Lastangriffsbereich, wobei die Ankerstange (7) einen Schaftbereich (17) zwischen Spreizbereich (12) und Lastangriffsbereich (16) mit einem zumindest ab-schnittweise nicht-kreisförmigen Querschnitt auf-weist, **dadurch gekennzeichnet, dass** der nicht-kreisförmige Querschnitt sich insgesamt über eine Länge erstreckt, die mindestens dem 1,0-fachen, insbesondere mindestens dem 2-fachen, des minimalen Durchmessers im Bereich des nicht-kreisförmigen Querschnitts entspricht.

10. Spreizanker nach Anspruch 9, **dadurch gekennzeichnet, dass** der Schaftbereich (17) Ausnehmungen (22) aufweist, die insbesondere im Wesentlichen in Längsrichtung der Ankerstange (7) verlaufen.

11. Spreizanker nach Anspruch 10, **dadurch gekennzeichnet, dass** die Querschnittsfläche B der Ausnehmungen (22) in Einbringrichtung der Ankerstange (7) zunimmt.

12. Spreizanker nach Anspruch 9, **dadurch gekennzeichnet, dass** der Schaftbereich (17) Rippen (23) aufweist, die insbesondere im Wesentlichen in Längsrichtung der Ankerstange (7) verlaufen.

13. Spreizanker nach Anspruch 9, **dadurch gekennzeichnet, dass** der Durchmesser im Bereich des nicht-kreisförmigen Querschnitts im Wesentlichen gleich groß wie der Durchmesser des Querschnitts im Lastangriffsbereich (16) ist.

**Fig. 1**

A1

**Fig. 2**

B

22

A

**Fig. 3**

B

22

A

23 **Fig. 4**

A2

19

8

**Fig. 5**

8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4219984 A1
- DE 3108388
- DE 2164666